Europäisches Patentamt

European Patent Office

Office européen des brevets

(11) Numéro de publication: **0 482 984 B1**

# FASCICULE DE BREVET EUROPEEN

(45) Date de publication de fascicule du brevet: **24.05.95**

(51) Int. Cl.⁶: **C04B 35/66**, C04B 35/65, B22D 41/54, B22D 41/32

(21) Numéro de dépôt: **91402781.8**

(22) Date de dépôt: **18.10.91**

(54) **Matériaux réfractaires liés par une matrice de sialon et procédé de préparation.**

(30) Priorité: **24.10.90 FR 9013168**

(43) Date de publication de la demande:
**29.04.92 Bulletin 92/18**

(45) Mention de la délivrance du brevet:
**24.05.95 Bulletin 95/21**

(84) Etats contractants désignés:
**AT BE DE ES FR GB IT NL SE**

(56) Documents cités:
**EP-A- 0 242 849**
**EP-A- 0 309 225**
**EP-A- 0 317 980**
**DE-A- 3 320 016**
**JP-A-58 084 914**

(73) Titulaire: **SAVOIE REFRACTAIRES**
**10 rue de l'Industrie**
**F-69631 Venissieux (FR)**

(72) Inventeur: **Schoennhal, Jacques Paul Raymond**
**4 Allée Marcel Achard**
**F-69100 Villeurbanne (FR)**

(74) Mandataire: **de Boisse, Louis Arnaud et al**
**CABINET de BOISSE**
**37, Avenue Franklin D. Roosevelt**
**F-75008 Paris (FR)**

## Description

L'invention concerne de nouveaux matériaux réfractaires constitués de grains liés par une matrice de sialon contenant des particules de nitrure de bore et/ou de graphite dispersées en son sein, ainsi qu'un procédé pour leur fabrication.

La sidérurgie a besoin de matériaux réfractaires de plus en plus performants et fiables : il s'agit en fait d'améliorer simultanément la résistance à la corrosion, la résistance mécanique à chaud et la résistance aux chocs thermiques.

Les applications concernées principalement sont :

- les pièces céramiques réfractaires intervenant dans les dispositifs de protection ou de régulation des jets de fonte ou d'acier. Des exemples particuliers de telles pièces sont les plaques d'obturateur à tiroir, les tubes protecteurs de jet et les busettes immergées,
- les pièces céramiques réfractaires intervenant dans les dispositifs de brassage, soit mécanique, soit par insufflation de gaz, dans le métal en fusion,
- les briques de siège servant de logement et support aux dispositifs d'insufflation de gaz et aux dispositifs de régulation des jets de métal, ainsi que les dalles d'impact de poche ou de répartiteur.
- Le revêtement intérieur des hauts-fourneaux et en particulier du bas de cuve, du ventre, des étalages, de la ceinture de tuyère et du creuset.

La grande diversité des sollicitations auxquelles ces matériaux sont confrontés résulte souvent du fonctionnement discontinu des équipements : il y a choc thermique au début puis à la fin d'un cycle ; durant un cycle, les pièces réfractaires sont successivement en contact avec le métal puis un laitier en fusion. Enfin, entre deux cycles, les pièces réfractaires qui restent à une température relativement élevée sont soumises à l'action oxydante de l'air ambiant.

Les contraintes mécaniques pures sont toujours présentes : chocs mécaniques et contraintes résultat des manutentions, contraintes de confinement créées par une enveloppe métallique extérieure, et enfin dans le cas des systèmes de régulation de jet, contraintes liées à la fonction même des pièces réfractaires, c'est-à-dire mouvements et effets d'obturation.

Enfin, l'on notera également que dans tous les cas, les pièces réfractaires considérées sont soumises à l'action érosive du métal en fusion.

La liste des propriétés souhaitées pour ces matériaux réfractaires s'établit donc ainsi :

- résistance mécanique à chaud élevée pour faire face soit à des contraintes mécaniques, soit aux effets d'érosion par l'écoulement du métal ou du laitier,
- excellente résistance à la corrosion chimique par la fonte et l'acier ;
- bonne résistance à la corrosion par les laitiers sidérurgiques et les poudres de couverture ;
- propriétés de non mouillabilité par les métaux et les laitiers, de façon à limiter leur infiltration dans les joints, fissures ou porosités, mais aussi à réduire les risques d'accrochage de croûtes solidifiées lors des refroidissements ;
- bonne résistance à l'oxydation par l'air ;
- excellente résistance aux chocs thermiques ;
- caractère non oxydant face à l'aluminium et au calcium dissous dans certains aciers ;
- propriétés tribologiques pour les pièces mobiles.

Malgré un environnement complexe et agressif on exige des pièces réfractaires concernées une grande fiabilité, car toute ruine accidentelle peut avoir des conséquences catastrophiques pour les installations et pour le personnel.

Les matériaux réfractaires à matrice nitrurée, sont réputés pour leur exceptionnelle résistance mécanique à haute température. L'emploi de matériaux basés sur un granulat de carbure de silicium lié par une matrice de nitrure de silicium ou de sialon, est répandu en tant que matériel d'enfournement ou briques utilisées pour le revêtement d'un haut-fourneau ou pour la métallurgie de l'aluminium. On connaît aussi par EP-A-0 317 980 des matériaux réfractaires formés d'un granulat à base d'alumine, lié par un liant formé d'oxynitrure de silicium et de sialon. Ces matériaux sont également recommandés pour la réalisation de matériel d'enfournement ou pour la métallurgie de l'aluminium.

Toutefois, l'emploi de ce type de matériaux en sidérurgie et en particulier en aciérie, est handicapé par une résistance aux chocs thermiques et une résistance à la corrosion insuffisante.

La présente invention vise à fournir de nouveaux matériaux réfractaires capables de répondre aux exigences mentionnées ci-dessus, ainsi qu'un procédé pour leur fabrication.

Plus particulièrement, l'invention concerne de nouveaux matériaux réfractaires caractérisés en ce qu'ils comprennent :

(A) 31-85% des grains d'au moins un matériau réfractaire dont les températures de fusion et de dissociation thermique sont supérieures à 1700°C ;

(B) 12-45% d'une matrice liante formée in situ et constituée majoritairement d'un sialon de la formule $Si_{6-z}Al_zO_zN_{8-z}$ où z vaut 0,5 à 4, comme déterminé à partir d'un diagramme de diffraction de rayons X ; et

(C) 3-42% des particules de nitrure de bore hexagonal et/ou des paillettes de graphite cristallisé dispersées dans la matrice liante et visible sur des microphotographies.

Comme exemples de matériaux réfractaires pouvant constituer les grains (A), on peut citer, de façon non limitative, les corindons, la mullite, le spinelle $MgO-Al_2O_3$, que ces produits soient électrofondus ou frittés ; les matériaux électrofondus présentent une teneur en alumine d'au moins 85% en poids ; la magnésie électrofondue ou frittée ; les matériaux électrofondus du système alumine-silice-zircone titrant au moins 50% en alumine et 5% en zircone ; les oxycarbures d'aluminium des types $Al_4O_4C$ et $Al_2OC$, les produits à base d'oxynitrure d'aluminium, et le carbure de silicium. Le choix de la nature des grains utilisés sera fonction de l'application particulière visée.

La proportion des grains (A) dans les matériaux de l'invention peut varier largement en fonction des propriétés recherchées pour le matériau. La proportion des grains (A) peut aller de 31 à 85% en poids environ. A l'heure actuelle on préfère une proportion de 36 à 68% en poids environ.

La phase liante (B), qui lie les grains (A) entre eux, est constituée majoritairement de sialon de formule $Si_{6-z}Al_zO_zN_{8-z}$ où z vaut de 0,5 à 4 et de préférence de 2,5 à 3,5.

La matrice liante contiendra habituellement aussi comme constituant(s) mineur(s) un ou plusieurs composés choisi parmi le nitrure de silicium $Si_3N_4$, l'oxynitrure de silicium $Si_2ON_2$, la mullite azotée de composition $Al_6Si_6N_8O_9$, le corindon et le polytype 15R du nitrure d'aluminium, le total de ces constituants mineurs n'excédant pas environ 15% de la matrice liante.

La proportion de la phase liante (B) peut elle aussi varier largement. La proportion de la phase liante (B) peut aller de 12 à 45% en poids environ. A l'heure actuelle, on préfère une proportion de 25 à 42% en poids environ.

Les particules (C) dispersées dans la phase liante peuvent être constituées de nitrure de bore, de graphite cristallisé ou d'un mélange de ceux-ci. Le graphite cristallisé est sous forme de paillettes. La présence de ces particules au sein de la phase liante peut être observée sur des microphotographies prises au microscope électronique à balayage.

La proportion de particules (C) peut également varier largement. La proportion des particules (C) peut aller de 3 à 42% en poids. A l'heure actuelle, on préfère une proportion de 5 à 30% environ.

L'invention concerne aussi un procédé de fabrication de matériaux réfractaires selon l'invention.

Ce procédé se caractérise en ce que

(1) on prépare une charge comprenant un mélange des constituants suivants dans les proportions indiquées :

a) 33 à 88% en poids, de préférence 40 à 75% de grains dont au moins 90% ont une grosseur comprise entre 50 $\mu$m et 5 mm, ces grains étant constitués d'un matériau réfractaire dont la température de fusion et la température de dissociation thermique éventuelle sont supérieures à 1700°C ;

b) 9 à 40% en poids, de préférence 20 à 35%, d'un mélange de poudres réactives comprenant :

(i) 23 à 90%, de préférence 35 à 45%, de poudre de silicium dont au moins 90% particules ont un diamètre inférieur à 150 $\mu$m,

(ii) 9 à 62%, de préférence 38 à 50%, d'alumine calcinée dont au moins 90% des particules ont un diamètre inférieur à 20 $\mu$m,

(iii) 0 à 24%, de préférence 12 à 20%, de poudre d'aluminium dont au moins 90% des particules ont un diamètre inférieur à 80 $\mu$m, le total des constituants (i) à (iii) représentant 100% et le rapport des proportions d'aluminium et d'alumine calcinée étant inférieur à 0,7,

c) 3 à 45% en poids, de préférence 5 à 33%, de particules de nitrure de bore hexagonal ou de particules de graphite cristallisé ou d'un mélange de celles-ci, au moins 80% des particules de graphite ayant une grosseur supérieure à 100 $\mu$m ;

d) 0 à 3% d'une argile réfractaire séchée et broyée, le total des ingrédients de (a) à (d) faisant 100% et

(e) une petite quantité de liant temporaire ;

(2) on met le mélange résultant à la forme désirée par pressage ;

(3) on sèche le mélange conformé ; et

(4) on cuit le mélange conformé et séché sous atmosphère d'azote à une température de 1300°C à 1600°C.

Pour assurer l'obtention de la matrice liante de sialon préférée ayant la formule indiquée où z = 2,5 à 3, 5, on a trouvé qu'il y avait lieu d'utiliser un mélange de poudres réactives comprenant, en poids, (i) 35-45% de la poudre de silicium, (ii) 38-50% de l'alumine calcinée, et (iii) 12-20% de la poudre d'aluminium.

La mise en forme effectuée dans l'étape (2) peut s'effectuer par un pressage uniaxial ou isostatique, de façon classique. Le rôle de l'argile est celui d'un additif de pressage facilitant la mise en forme.

L'étape de séchage (3) peut être effectuée à une température modérément élevée, par exemple de 100 à 200°C, de préférence vers 150°C.

La durée de l'étape de cuisson (4) peut varier largement en fonction notamment de la taille de l'article conformé et séché. A titre indicatif, une durée de maintien de 4 à 10 heures environ à une température de 1300-1400°C est habituellement satisfaisante.

On notera qu'il existe une différence entre les teneurs en granulat, graphite et nitrure de bore du mélange initial et la proportion des mêmes constituants dans le produit fini, puisque la cuisson s'accompagne d'une fixation d'azote et donc d'une prise de poids.

Les grains (a) peuvent être constitués, par exemple, de corindon, de mullite, de spinelle MgO-Al$_2$O$_3$, que ces produits soient électrofondus ou frittés, d'alumine tabulaire, de matériaux électrofondus présentant une teneur en alumine d'au moins 85% en poids, de magnésie électrofondue ou frittée, de matériaux électrofondus du système alumine-silice-zircone titrant au moins 50% en alumine et 5% en zircone, des oxycarbures d'aluminium de type Al$_4$O$_4$C et Al$_2$OC, de produits à base d'oxynitrure d'aluminium, ou de carbure de silicium.

Les particules d'alumine calcinée (ii) sont des particules d'alumine réactive qui réagissent avec les ingrédients (i) et (iii) lors de l'étape de cuisson sous azote, pour former la phase sialon.

Le graphite cristallisé, utilisé comme ingrédient (c) est sous forme de paillettes de grande dimension afin d'éviter une réaction substantielle avec les poudres métalliques (formation de carboxynitrures au lieu de sialon). En outre, la résistance à l'oxydation est améliorée par rapport à celle obtenue avec d'autres formes de carbone.

Le liant temporaire (e) peut être constitué de tout liant temporaire connu. A titre d'exemple, on peut citer les résines phénoliques, les alcools furfuryliques et polyvinyliques, des solutions aqueuses de dextrine ou de carboxyméthyl-cellulose, ou de lignosulfonate de calcium. A titre indicatif, une quantité de liant temporaire de l'ordre de 2 à 4% en poids environ, par rapport au total des ingrédients (a) à (d) s'est révélée habituellement satisfaisante.

L'invention est illustrée, de façon non limitative, par les exemples suivants. Dans ces exemples, on a préparé des briques d'essai de 220 x 110 x 60 mm par un processus dans lequel les constituants de départ ont été mélangés, par charge de 10 kg, dans un malaxeur Bonnet, mis à la forme de briques à l'aide d'une presse hydraulique exerçant une pression de 1000 bars, séchés à 150°C, puis cuits sous azote, dans un four électrique industriel, à une température de 1300 à 1600°C pendant 4 à 10 heures, selon les cas.

Les propriétés des matériaux ont été déterminées par les essais suivants :

Résistance à la flexion à chaud : mesurée à l'air, après un échauffement accéléré pour limiter les effets de l'oxydation.

Résistance au choc thermique : nous l'exprimons par la perte, en %, de résistance à la flexion à froid mesurée sur des barreaux 125 x 25 x 25 mm après le traitement suivant :

Introduction brutale des éprouvettes à température ambiante dans un four chauffé à 1200°C, maintien pendant 30 mn, puis trempe des éprouvettes dans de l'eau froide.

Résistance à la corrosion par l'acier, la fonte et les laitiers : elle est déterminée par la méthode dynamique dite des "doigts tournants". Quatre éprouvettes taillées en forme de barreaux sont fixées en cercle sur un support animé d'un mouvement de rotation selon un axe vertical correspondant à une vitesse linéaire des éprouvettes de 2,4 cm/s. Au moins une des éprouvettes sert de référence.

L'agent d'attaque (acier, fonte ou laitier) est placé dans un creuset réfractaire et porté à la température d'essai. Lorsque la température d'essai est atteinte, le support porte-éprouvettes est abaissé de façon à plonger l'extrémité inférieure des éprouvettes dans le métal ou le laitier fondu pendant un temps prédéterminé. A la fin de l'essai, le support porte-éprouvettes est relevé de façon à extraire les éprouvettes de l'agent d'attaque fondu avant solidification de celui-ci. Après refroidissement, on mesure la perte d'épaisseur des éprouvettes et l'on procède si nécessaire à l'examen microscopique du front de corrosion.

Dans le cas de la résistance à la corrosion par l'acier, on a utilisé un acier XC 38 à 1700°C sous atmosphère d'argon comme agent d'attaque et une durée de maintien des éprouvettes dans l'acier fondu de 4 heures.

Résistance à la corrosion par poudre de couverture : la poudre de couverture, qui est formée de composés à point de fusion relativement bas, est introduite dans les lingotières afin de protéger la surface du métal coulé (acier) contre l'oxydation. Les pièces qui se trouvent à l'interface acier/poudre de couverture, telles que des busettes immergées, subissent une corrosion intense et localisée à ladite interface.

L'essai de résistance à la corrosion par la poudre de couverture est réalisé par la méthode des doigts tournants sus-décrite à propos de la résistance à la corrosion par l'acier et les laitiers.

Test de mouillabilité par les métaux fondus :

Il consiste à mesurer l'angle de contact formé entre une surface du matériau réfractaire testé et une goutte de métal d'essai fondu. La mouillabilité est d'autant plus faible que l'angle est grand.

Pour réaliser ce test, l'on prépare une plaquette de matériau réfractaire à tester, en polissant l'une de ses faces. Sur cette face, l'on pose un petit cube (5 à 10 mm d'arêtes) du métal d'essai et l'on place l'ensemble dans un four électrique sous atmosphère d'argon. L'on élève ensuite régulièrement la température et, à partir du point de fusion du métal, l'on photographie régulièrement l'ensemble de façon à suivre l'évolution de l'angle de contact en fonction de la température.

Autres propriétés : les autres propriétés, telles que la densité, la porosité, la résistance à la flexion à froid, etc..... ont été déterminées par les méthodes habituelles utilisées pour les produits réfractaires.

Dans les exemples, on a utilisé les matières premières suivantes :

- Carbure de silicium vendu par la Société Péchiney Electrométallurgie. Sous l'appellation Arbina Cristallisé. Il s'agit d'un matériau constitué essentiellement de la variété SiC alpha et contenant en moyenne 98,5% de SiC à l'analyse chimique.
- Corindon électrofondu répondant à l'analyse suivante en % en poids : $Al_2O_3$ = 96%, $TiO_2$ = 3, $SiO_2$ = 0,6%, $Fe_2O_3$ = 0,2%, CaO + MgO + $Na_2O$ + $K_2O$ = 0,2% .
- Alumine fine calcinée du commerce titrant au moins 99,5% d'$Al_2O_3$, ayant une grosseur moyenne de particules d'environ 5 $\mu$m avec 90% des particules comprises entre 1 et 20 $\mu$m.
- Silicium en poudre du commerce, vendu sous l'appellation "Silicium T.140" par la Société Péchiney Electrométallurgie, dont au moins 90% des particules ont une grosseur inférieure à 150 $\mu$m.
- Aluminium en poudre du commerce, vendu sous l'appellation "Aluminium 200 TV" par la Société Péchiney Electrométallurgie, dont au moins 90% des particules ont une grosseur inférieure à 80 $\mu$m.
- Graphite naturel cristallisé sous forme de paillettes, en provenance de Chine ou de Madagascar, ayant une teneur en cendres inférieure à 17% en poids et dont au moins 80% des particules ont une grosseur supérieure à 100 $\mu$m.
- Nitrure de bore hexagonal, vendu sous l'appellation HCST-A05 par la Société Herman C. Starck. Ce nitrure est formé d'agglomérats d'une grosseur de 1 à 10 $\mu$m constitués de feuillets individuels d'une grosseur de 0,5 à 1 $\mu$m environ.
- Argile broyée, vendue sous l'appellation "DA.40/42" par la Société Denain Anzin Minéraux, répondant à l'analyse chimique suivante, en % en poids : $Al_2O_3$ = 36%, $SiO_2$ = 47%, $Fe_2O_3$ = 1,8%, $TiO_2$ = 1,8%, CaO + MgO + $Na_2O$ + $K_2O$ = 0,8%, perte au feu : 12,6%.

EXEMPLE 1

On a préparé par le mode opératoire décrit ci-dessus, 7 échantillons A à G formés de grains de corindon à liant sialon à partir d'une charge de départ contenant respectivement diverses proportions de paillettes de graphite.

Le Tableau I ci-après récapitule les constituants de la charge de départ et leurs proportions en % en poids et diverses propriétés des matériaux obtenus. L'échantillon A est en dehors de l'invention et est présenté à titre indicatif.

**TABLEAU I**

| Echantillon | A (en dehors de l'invention) | B | C | D | E | F | G |
|---|---|---|---|---|---|---|---|
| Corindon noir (2/0,2mm) | 40 | 40 | 40 | 40 | 40 | 40 | 33 |
| Corindon noir (0,2/0,05mm) | 33 | 28 | 23 | 18 | 8 | 0 | 0 |
| Alumine fine calcinée | 10 | 10 | 10 | 10 | 10 | 10 | 8 |
| Aluminium 200 TV | 4 | 4 | 4 | 4 | 4 | 4 | 3 |
| Silicium T.140 | 10 | 10 | 10 | 10 | 10 | 10 | 8 |
| Graphite JPF 80 | 0 | 5 | 10 | 15 | 25 | 33 | 45 |
| Argile DA 40/42 | 3 | 3 | 3 | 3 | 3 | 3 | 3 |
| Dextrine en poudre | +0,5 | +0,5 | +0,5 | +0,5 | +0,5 | +0,5 | +0,5 |
| Eau | +2 | +2 | +2 | +2 | +2 | +2 | +2 |

**TABLEAU I (Suite)**

| Echantillon | A (en dehors de l'invention) | B | C | D | E | F | G |
|---|---|---|---|---|---|---|---|
| Densité | 3,05 | 2,96 | 2,89 | 2,81 | 2,66 | 2,58 | 2,30 |
| Résistance à la flexion à 20°C (MPa) | 22 | 21 | 18 | 16 | 15 | 10 | 9 |
| Résistance à la flexion à 1500°C (MPa) | 31 | 27 | 25 | 16 | 12 | 10 | 8 |
| Résistance au choc thermique** : perte de RF après trempe (%) | -51 | -51 | -47 | -40 | -31 | -15 | -10 |
| Résistance à la corrosion par l'acier à 1700°C, Taux d'usure (%) | 0 | 0 | 0 | 0 | 0 | 0 | 0 |
| Stabilité thermique*** Perte de poids % | -7 | -7,4 | - | -6,2 | - | -7,4 | - |
| Analyse minéralogique : Sialon % Graphite % AlN % | 30 0 0 | 29 3,7 traces | 28 7,5 2 | 28,5 11 2 | 29 19 traces | 28 25 traces | 23 34 0 |

* le signe "+" devant un pourcentage signifie que ce pourcentage est calculé par rapport à 100% des autres constituants.
** après 1 cycle 20°C/1200°C/eau
*** recuisson à 1750°C/5h sous argon

On observe une amélioration sensible de la résistance au choc thermique pour une teneur en graphite (mesurée sur le produit final) supérieure à 4%.

Pour les très hautes teneurs en graphite (30 à 35%, échantillon G), la résistance au choc thermique est voisine de celle d'un produit d'alumine-graphite à liant résine de même teneur en graphite et actuellement couramment utilisé pour réaliser les tubes protecteurs de jets et busettes immergées. La résistance mécanique à chaud du produit selon l'invention, est toutefois double de celle du produit classique.

Dans cette série d'essais, on a également étudié la stabilité thermique des matériaux par recuisson sous argon à 1750°C durant 5 heures. Il apparaît que l'addition de graphite ne dégrade en rien la stabilité

7

thermique du liant sialon.

EXEMPLE 2

On a préparé selon le mode opératoire décrit ci-dessus deux échantillons H et I formés de grains de carbure de silicium à liant sialon contenant respectivement O et 8% de nitrure de bore. Le Tableau II récapitule les constituants de la charge de départ, leurs proportions et diverses propriétés des matériaux obtenus. L'échantillon H est en dehors de l'invention et est présenté à titre indicatif.

Il apparaît que l'addition de nitrure de bore permet encore d'améliorer de façon importante la résistance au choc thermique de ces matériaux réputés déjà très résistants.

## TABLEAU II

| Echantillon | H | I |
|---|---|---|
| Carbure de silicium 2-0,5 mm | 10 | 10 |
| Carbure de silicium 0,5-0,125 mm | 30 | 30 |
| Carbure de silicium 0,125-0,05 mm | 23 | 14,5 |
| Alumine fine calcinée | 14 | 14 |
| Aluminium 200T | 5 | 5 |
| Silicium T140 | 15 | 15 |
| Nitrure de bore | O | 8,5 |
| Argile DA 40/42 | 3 | 3 |
| Carboxyméthylcellulose en poudre | + 0,5 | + 0,5 |
| Eau | + 2 | + 2 |
| Densité | 2,72 | 2,70 |
| Résistance à la flexion à 20°C (MPa) | 45 | 36 |
| Résistance à la flexion à 1500°C (MPa) | 45 | 31 |
| Résistance au choc thermique - Perte de résistance à la flexion après 3 trempes (%)* | - 75 | - 47 |
| Analyse minéralogique : | | |
| Sialon % | 36,5 | 36 |
| BN % | O | 7,5 |
| AlN15R % | traces | traces |
| Corindon % | 3 | 4 |
| Nitrure de silicium | 2 | 2 |

\* Après trois cycles 20°C-1200°C-eau

EXEMPLE 3

On a préparé selon le mode opératoire décrit ci-dessus un échantillon J formé de grains de corindon à liant sialon contenant 8% de nitrure de bore. Le tableau III récapitule les constituants de la charge de départ, leurs proportions et diverses propriétés du matériau obtenu. L'échantillon A est rappelé à titre comparatif.

On observe une amélioration importante de la résistance à la corrosion par la poudre de couverture et une amélioration spectaculaire des propriétés de non-mouillabilité par l'acier. Cette dernière propriété permettra de réduire les risques d'infiltration d'acier entre les plaques des systèmes de fermeture à tiroir et dans les fentes des dispositifs d'insufflation de gaz dans les bains d'acier fondu.

## TABLEAU III

| Echantillon | A | J |
|---|---|---|
| Corindon noir 2-0,2 mm<br>Corindon noir 0,2-0,05 mm<br>Alumine fine calcinée<br>Aluminium 200TV<br>Silicium T140<br>Nitrure de bore<br>Argile DA 40/42<br>Dextrine en poudre<br>Eau | 40<br>33<br>10<br>4<br>10<br>0<br>3<br>+ 0,5<br>+ 2 | 40<br>24,5<br>10<br>4<br>10<br>8,5<br>3<br>+ 0,5<br>+ 2 |
| Densité | 3,05 | 2,85 |
| Résistance à la flexion à 20°C (MPa) | 22 | 20 |
| Résistance à la flexion à 1500°C (MPa) | 31 | 26 |
| Résistance au choc thermique – Perte de résistance à la flexion après trempe % * | - 51 | - 42 |
| Résistance à la corrosion à 1550°/3h par poudre de couverture ** Taux d'usure % | - 65 | - 51 |
| Angle de mouillabilité par l'acier à 1580°C (degré) | 109 | 153 |

```
*    Après 1 cycle 20°C-1200°C-eau
**   Composition de la poudre de couverture :
```

$SiO_2$ = 35% ; $Al_2O_3$ = 7% ; CaO = 35,4%
MgO = 0,2% ; $Na_2O$ = 11% ; $K_2O$ = 0,5%
Fluor = 8% ; Carbone = 2,5% ; Fe = 0,4%

Le Tableau IV permet de comparer les caractéristiques d'emploi d'un matériau de corindon à liant mullite cuit à haute température, actuellement utilisé pour les plaques de fermeture à tiroir, avec le matériau J.

Il démontre les avantages du matériau selon l'invention des points de vue de la résistance mécanique à chaud, de la résistance au choc thermique et de la non-mouillabilité par l'acier.

**TABLEAU IV**

| Type de produit | Corindon à liant mullite | Echan- tillon J |
|---|---|---|
| $Al_2O_3$ <br> $SiO_2$ <br> $ZrO_2$ <br> Sialon <br> BN <br> Divers | 87,5 <br> 7,5 <br> 4,5 <br> - <br> - <br> 0,5 | 61 <br> 0,5 <br> - <br> 29,5 <br> 8 <br> 1 |
| Densité | 3,15 | 2,85 |
| Résistance à la flexion à 1500°C (MPa) | 11 | 26 |
| Coefficient de dilatation ($10^{-6} K-1$) | 7,1 | 5,5 |
| Résistance au choc thermique - Perte de résistance à la flexion après trempe % * | - 59 | - 42 |
| Angle de mouillabilité par l'acier à 1580°C (degré) | 116 | 153 |

Exemple 4

On a préparé par le mode opératoire général décrit ci-dessus un échantillon formé de grains de magnésie électrofondue à liant sialon (z = 3) contenant 14% de nitrure de bore.

La magnésie utilisée avait la spécification suivante, en % en poids, MgO = 98,3%, SiO < 1%, $B_2O_3$ < 0,05% avec un rapport $CaO/SiO_2$ > 2.

Le Tableau V ci-après récapitule la composition de la charge de départ, et diverses propriétés du matériau obtenu.

## TABLEAU V

| Charge de départ | | |
|---|---|---|
| Magnésie électrofondue (2-1,25 mm) | 18% en poids | |
| Magnésie électrofondue (1,25-0,5 mm) | 18% en poids | |
| Magnésie électrofondue (0,5-0,1mm) | 26% en poids | |
| Aluminium 200 TV | 3,8% en poids | |
| Silicium T 140 | 8,5% en poids | |
| Alumine fine calcinée | 10,7% en poids | |
| Nitrure de bore | 15% en poids | |
| Dextrine en poudre | + 0,5% en poids | |
| Eau | + 2 % en poids | |

| Propriétés | | |
|---|---|---|
| Densité | 2,62 |
| Résistance à la flexion à 20°C (MPa) | 16 |
| Résistance à la flexion à 1500°C (MPa) | 10 |
| Résistance au choc thermique (%) | - 67 |

| Analyse minéralogique | | |
|---|---|---|
| Sialon (z = 3) | 25% en poids |
| Nitrure de bore | 14% en poids |
| Spinelle* | ∿ 5% en poids |
| Magnésie | 59% en poids |

* La formation de spinelle résulte de la réaction superficielle des grains de magnésie et d'une partie de l'alumine fine.

Les matériaux selon l'invention sont donc utiles pour toutes sortes d'applications dans le domaine de la métallurgie de l'acier et en particulier pour les pièces réfractaires intervenant dans les dispositifs de protection ou de régulation des jets de fonte ou d'acier et dans les dispositifs d'insufflation de gaz dans le métal en fusion.

## Revendications

1. Matériaux réfractaires à base de grains réfractaires liés par une matrice liante formée in situ, caractérisés en ce qu'ils comprennent :

(A) 31-85% de grains d'au moins un matériau réfractaire dont le point de fusion ou le point de dissociation thermique éventuel est supérieur à 1700°C, ces grains étant dispersés dans

(B) 12-45% d'une matrice liante formée in situ et constituée en forte majorité d'un sialon de formule $Si_{6-z}Al_zO_zN_{8-z}$ où z vaut 0,5 à 4, comme déterminé d'après un diagramme de diffraction de rayons X, et

(C) 3-42% de particules de nitrure de bore hexagonal et/ou de paillettes de graphite cristallisé dispersées dans la matrice liante et visibles sur des microphotographies.

2. Matériaux réfractaires selon la revendication 1, caractérisés en ce que les grains (A) sont choisis parmi les corindons, la mullite, le spinelle $MgO-Al_2O_3$, que ces produits soient électrofondus ou frittés ; l'alumine tabulaire, les matériaux électrofondus présentant une teneur en alumine d'au moins 85% en poids ; la magnésie électrofondue ou frittée, les matériaux électrofondus du système alumine-silice-zircone contenant au moins 50% en alumine et 5% en zircone, les oxycarbures d'aluminium des types $Al_4O_4C$ et $Al_2OC$, les produits à base d'oxynitrure d'aluminium, et le carbure de silicium.

3. Matériaux réfractaires selon la revendication 1 ou 2, caractérisés en ce que les grains (A) sont constitués de corindon.

4. Matériaux selon l'une quelconque des revendications 1-3, caractérisés en ce que z vaut de 2,5 à 3,5.

5. Matériaux selon la revendication 4, caractérisés en ce qu'ils comprennent en % en poids : 36-68% de (A), 25-42% de (B) et 5-30% de (C).

6. Procédé de fabrication d'un matériau réfractaire, caractérisé en ce que
   (1) on prépare une charge comprenant un mélange des constituants suivants dans les proportions indiquées :
      a) 33 à 88% en poids de grains dont au moins 90% ont une grosseur comprise entre 50 $\mu$m et 5 mm, ces grains étant constitués d'un matériau réfractaire dont la température de fusion et la température de dissociation thermique éventuelle sont supérieures à 1700°C ;
      b) 9 à 40% d'un mélange de poudres réactives comprenant :
         (i) 23 à 90% de poudre de silicium dont au moins 90% particules ont un diamètre inférieur à 150 $\mu$m,
         (ii) 9 à 62% d'alumine calcinée dont au moins 90% des particules ont un diamètre inférieur à 20 $\mu$m,
         (iii) 0 à 24% de poudre d'aluminium dont au moins 90% des particules ont un diamètre inférieur à 80 $\mu$m, le total des constituants (i) à (iii) représentant 100% et le rapport des proportions d'aluminium et d'alumine calcinée étant inférieur à 0,7,
      c) 3 à 45% en poids de particules de nitrure de bore hexagonal ou de paillettes de graphite cristallisé ou d'un mélange de celles-ci, au moins 80% des paillettes de graphite ayant une grosseur supérieure à 100 $\mu$m ;
      d) 0 à 3% d'une argile réfractaire séchée et broyée, le total des ingrédients de (a) à (d) faisant 100% et
      (e) une petite quantité de liant temporaire ;
   (2) on met le mélange résultant à la forme désirée par pressage ;
   (3) on sèche le mélange conformé ; et
   (4) on cuit le mélange conformé et séché sous atmosphère d'azote à une température de 1300°C à 1600°C.

7. Procédé selon la revendication 6, caractérisé en ce que le constituant (a) est choisi parmi les grains de corindon, de mullite, de spinelle $MgO-Al_2O_3$, de zircone, électrofondus ou frittés ; d'alumine tabulaire, de matériaux électrofondus présentant une teneur en alumine d'au moins 85% en poids, de magnésie électrofondue ou frittée, de matériaux électrofondus du système alumine-silice-zircone titrant au moins 50% en alumine et 5% en zircone, d'oxycarbures d'aluminium des types $Al_4O_4C$ et $Al_2OC$, de produits à base d'oxynitrure d'aluminium, et de carbure de silicium.

8. Procédé selon la revendication 6 ou 7, caractérisé en ce que le constituant (a) est formé de grains de corindon.

9. Procédé selon la revendication 6, caractérisé en ce que le mélange de poudres réactives (b) comprend 35-45% de (i), 38-50% de (ii) et 12-20% de (iii).

12

EP 0 482 984 B1

**10.** Procédé selon la revendication 6 ou 9, caractérisé en ce que la charge de départ comprend 40-75% de (a), 20-35% de (b) et 5-33% de (c).

## Claims

**1.** Refractory materials based on refractory particles bonded together with a binding matrix produced in situ, characterised in that they comprise :

(A) 31-85% of particles of at least one refractory material whose melting point or, where appropriate, thermal decomposition temperature is higher than 1700 °C, these particles being dispersed in

(B) 12-45% of a binding matrix produced in situ and consisting predominantly of a sialon of formula $Si_{6-z}Al_zO_zN_{8-z}$ where z ranges from 0.5 to 4, as determined from an X-ray diffraction pattern, and

(C) 3-42% of particles of hexagonal boron nitride and/or crystalline graphite flakes dispersed in the binding matrix and visible on microphotographies.

**2.** Refractory materials according to Claim 1, characterised in that the particles (A) are chosen from corundums, mullite or MgO-Al$_2$O$_3$ spinel, regardless of whether these products are electrocast or sintered, tabular alumina, electrocast materials having an alumina content of at least 85% by weight; electrocast or sintered magnesia, electrocast materials of the alumina/silica/zirconia system containing at least 50% of alumina and 50% of zirconia, aluminium oxycarbides of the Al$_4$O$_4$C and Al$_2$OC types, materials based on aluminium oxynitride, and silicon carbide.

**3.** Refractory materials according to Claim 1 or 2, characterised in that the particles (A) consist of corundum.

**4.** Materials according to any one of Claims 1-3, characterised in that $z$ is 2.5 to 3.5.

**5.** Materials according to Claim 4, characterised in that they comprise, in % by weight: 36-68% of (A), 25-42% of (B) and 5-30% of (C).

**6.** Process for the production of a refractory material, characterised in that

(1) a mixture of the following constituents in the indicated proportions is prepared:

a) 33 to 88% by weight of particles, at least 90% of which are between 50 $\mu$m and 5 mm in size, these particles consisting of a refractory material whose melting point and, where appropriate, thermodecomposition temperature are higher than 1700 °C;

b) 9 to 40% of a mixture of reactive powders comprising:

(i) 23 to 90% of silicon powder, at least 90% of the particles of which have a diameter smaller than 150 $\mu$m,

(ii) 9 to 62% of calcined alumina, at least 90% of the particles of which have a diameter smaller than 20 $\mu$m, and

(iii) 0 to 24% of aluminium powder, at least 90% of the particles of which have a diameter smaller than 80 $\mu$m, the sum of the constituents (i) to (iii) representing 100% and the ratio of the proportions of aluminium and calcined alumina being less than 0.7,

c) 3 to 45% by weight of hexagonal boron nitride particles or of crystalline graphite flakes or of a mixture of these, at least 80% of the graphite flakes being greater than 100 $\mu$m in size;

d) 0 to 3% of a dried and ground refractory clay, the sum of the ingredients (a) to (d) making up 100%, and

(e) a small amount of temporary binder;

(2) the resulting mixture is shaped to the desired shape by pressing;

(3) the shaped mixture is dried; and

(4) the shaped and dried mixture is calcined under a nitrogen atmosphere at a temperature of 1300 °C to 1600 °C.

**7.** Process according to Claim 6, characterised in that the constituent (a) is chosen from particles of corundum, mullite or MgO-Al$_2$O$_3$ spinel, these being electrocast or sintered, tabular alumina, electrocast materials having an alumina content of at least 85% by weight, electrocast or sintered magnesia, electrocast materials of the alumina/silica/ zirconia system containing at least 50% of alumina and 5% of zirconia, aluminium oxycarbides of the Al$_4$O$_4$C and Al$_2$OC type, materials based on aluminium oxynitride, and silicon carbide.

13

8. Process according to Claim 6 or 7, characterised in that the constituent (a) is formed of corundum particles.

9. Process according to Claim 6, characterised in that the mixture of reactive powders (b) comprises 35-45% of (i), 38-50% of (ii) and 12-20% of (iii).

10. Process according to Claim 6 or 9, characterised in that the starting batch comprises 40-75% of (a), 20-35% of (b) and 5-33% of (c).

**Patentansprüche**

1. Hitzebeständige Materialien auf der Basis von, durch eine auf der Lage geformte Matrix gebundenen Körnern dadurch gekennzeichnet, daß sie umfassen :
   (A) 31 bis 85 % Körner wenigstens eines hitzebeständigen Materials, dessen Schmelzpunkt oder gegebenenfalls thermischer Zersetzungspunkt über 1700°C liegt, wobei die Körner dispergiert sind in
   (B) 12 bis 45 % einer bindenden auf der Lage geformten Matrix, die überwiegend aus einem Sialon der Formel $Si_{6-z}Al_zO_zN_{8-z}$ besteht, worin z einen Wert von 0.5 bis 4 aufweist, bestimmt anhand eines Röntgendiffraktionsdiagramms, und
   (C) 3 bis 42 % auf Mikrophotographien sichtbare, in der bindenden Matrix dispergierte Teilchen aus haxagonalem Bornitrid und/oder Flittern kristallisierten Graphits.

2. Hitzebeständige Materialien nach Anspruch 1, dadurch gekennzeichnet, daß die Körner (A) ausgewählt sind aus Korunden, Mullit, Spinell $MgO-Al_2O_3$, wobei diese Produkte elektrogeschmolzen oder gesintert sind; tafelförmigem Aluminiumoxid, elektrogeschmolzenen Materialien, die einen Aluminiumoxid-Gehalt von wenigstens 85 Gew.-% aufweisen; elektrogeschmolzenem oder gesintertem Magnesiumoxid, elektrogeschmolzenen Materialien des Systems Aluminiumoxid/Siliciumdioxid/Zirconiumoxid, die wenigstens 50% Aluminiumoxid und 5% Zirconiumoxid enthalten, Aluminiumoxidcarbiden des Typs $Al_4O_4C$ und $Al_2OC$, Produkte auf der Basis von Aluminiumoxidnitrid, und Siliciumcarbid.

3. Hitzebeständige Materialien nach Anspruch 1 oder 2, dadurch gekennzeichnet, daß die Körner (A) aus Korund bestehen.

4. Materialien nach irgendeinem der Ansprüche 1 bis 3, dadurch gekennzeichnet, daß z gleich 2,5 bis 3,5 ist.

5. Materialien nach Anspruch 4, dadurch gekennzeichnet, daß sie in Gew.-% enthalten: 36-68% (A), 25-42% (B) und 5-30% (C).

6. Verfahren zur Herstellung eines hitzebeständigen Materials, dadurch gekennzeichnet, daß
   (1) eine Beschickung vorbereitet wird, umfassend eine Mischung der folgenden Bestandteile in den angegebenen Anteilen:
   a) 33 bis 88 Gew.-% Körner, von denen wenigstens 90% eine Größe zwischen 50 $\mu$m und 5 mm aufweisen, wobei diese Körner aus einem hitzebeständigen Material bestehen, dessen Schmelztemperatur oder gegebenenfalls Temperatur der thermischen Zersetzung über 1700°C liegt;
   b) 9 bis 40% einer Mischung aus reaktiven Pulvern, umfassend:
      (i) 23 bis 90% Silicium-Pulver, bei dem wenigstens 90% der Teilchen einen Durchmesser von weniger als 150 $\mu$m aufweisen;
      (ii) 9 bis 62% gebranntes Aluminiumoxid, bei dem wenigstens 90% der Teilchen einen Durchmesser von weniger als 20 $\mu$m aufweisen;
      (iii) 0 bis 24% Aluminium-Pulver, bei dem wenigstens 90% der Teilchen einen Durchmesser von weniger als 80 $\mu$m aufweisen, wobei die Gesamtbestandteile (i) bis (iii) 100% darstellen und das Verhältnis der Anteile von Aluminium und gebranntem Aluminiumoxid kleiner als 0,7 ist.
   c) 3 bis 45 Gew.-% Teilchen aus hexagonalem Bornitrid oder Flittern kristallisierten Graphits oder einer Mischung derselben, wobei wenigstens 80% der Graphit-Flitter eine Größe von über 100 $\mu$m aufweisen;

EP 0 482 984 B1

d) 0 bis 3% eines hitzebeständigen, getrockneten und gemahlenen Tons, wobei die Gesamtbestandteile (a) bis (d) 100% ausmachen; und

e) eine kleine Menge eines temporären Bindemittels;

(2) die resultierende Mischung durch Pressen in die gewünschte Form gebracht wird;

(3) die geformte Mischung getrocknet wird; und

(4) die geformte und getrocknete Mischung unter Stickstoff-Atmosphäre bei einer Temperatur von 1300 bis 1600 ° C gebrannt wird.

7. Verfahren nach Anspruch 6, dadurch gekennzeichnet, daß der Bestandteil (a) ausgewählt ist aus elektrogeschmolzenen oder gesinterten Körnern aus Korund, Mullit, Spinell MgO-Al$_2$O$_3$, Zirconiumoxid; tafelförmigem Aluminiumoxid, elektrogeschmolzenen Materialien, die einen Aluminiumoxid-Gehalt von wenigstens 85 Gew.-% aufweisen; elektrogeschmolzenem oder gesintertem Magnesiumoxid, elektrogeschmolzenen Materialien des Systems Aluminiumoxid/Siliciumdioxid/Zirconiumoxid, die wenigstens 50% Aluminiumoxid und 5% Zirconiumoxid enthalten, Aluminiumoxidcarbiden des Typs Al$_4$O$_4$C und Al$_2$OC, Produkte auf der Basis von Aluminiumoxidnitrid, und Siliciumcarbid.

8. Verfahren nach Anspruch 6 oder 7, dadurch gekennzeichnet, daß der Bestandteil (a) aus Korund-Körnern besteht.

9. Verfahren nach Anspruch 6, dadurch gekennzeichnet, daß die Mischung der reaktiven Pulver (b) 35-45% (i), 38-50% (ii) und 12-20% (iii) umfaßt.

10. Verfahren nach Anspruch 6 oder 9, dadurch gekennzeichnet, daß die Ausgangsbeschickung 40-75% (a), 20-35% (b) und 5-33% (c) umfaßt.